# NEUE EUROPÄISCHE PATENTSCHRIFT

(11) **EP 3 061 984 B2**
(45) Veröffentlichungstag und Bekanntmachung des Hinweises auf die Entscheidung über den Einspruch: **02.04.2025**
(45) Hinweis auf die Patenterteilung: 10.04.2019
(21) Anmeldenummer: 16156474.5
(22) Anmeldetag: 19.02.2016
(51) Int. Cl.: F16D 13/62, F16D 13/52, F16D 13/68, F16D 13/64

(54) **KUPPLUNGSEINRICHTUNG**
CLUTCH DEVICE
DISPOSITIF D'EMBRAYAGE

(30) Priorität: 27.02.2015 DE 102015203558
(43) Veröffentlichungstag der Anmeldung: 31.08.2016
(73) Patentinhaber: Schaeffler Technologies AG & Co. KG, 91074 Herzogenaurach (DE)
(72) Erfinder: Ossadnik, Thomas, 16547 Birkenwerder (DE)
(74) Vertreter: DTS Patent- und Rechtsanwälte PartmbB

(56) Entgegenhaltungen:
- EP-A1- 1 645 765
- DE-A1- 102004 057 158
- DE-A1- 102012 006 730
- DE-A1- 102012 011 180
- DE-A1- 102013 012 815
- DE-A1- 102014 205 064
- US-A1- 2007 193 848
- US-A1- 2014 238 812

## Beschreibung

Die Erfindung betrifft eine Kupplungseinrichtung gemäß Patentanspruch 1.

Aus der EP 1 382 872 A1 ist eine Mitnehmereinheit für ein Lamellenkupplungssystem bekannt. Die Mitnehmereinheit umfasst eine Mitnehmerscheibe und einen Kupplungskorb, wobei auf der Mitnehmerscheibe eine Außenverzahnung vorgesehen ist und wobei das Gehäuse des Kupplungskorbs mit einer zur Außenverzahnung der Mitnehmerscheibe zumindest abschnittsweise form- und funktionskomplementären Innenverzahnung vorgesehen ist.

In US 2007/193848 ist ein weiteres Beispiel gegeben von einer Kupplungseinrichtung mit einem Druckring um die Abstützung einer Betätigungskraft zu schaffen.

Es ist Aufgabe der Erfindung eine verbesserte Kupplungseinrichtung bereitzustellen. Diese Aufgabe wird mittels einer Mitnehmereinheit gemäß Patentanspruch 1 gelöst. Vorteilhafte Ausführungsformen sind in den abhängigen Ansprüchen angegeben. Erfindungsgemäß wurde erkannt, dass eine verbesserte Kupplungseinrichtung dadurch bereitgestellt werden kann, dass die Kupplungseinrichtung drehbar um eine Drehachse lagerbar ist. Die Kupplungseinrichtung weist eine Mitnehmereinheit, eine Betätigungseinrichtung, eine Eingangsseite, eine Ausgangsseite und ein Reibpaket auf. Das Reibpaket umfasst einen ersten Reibpartner und einen zweiten Reibpartner. Die Mitnehmereinheit umfasst einen Lamellenträger, ein Mitnehmerteil und einen Druckring. Der Lamellenträger ist mit dem ersten Reibpartner drehmomentschlüssig gekoppelt. Der zweite Reibpartner ist drehmomentschlüssig mit der Ausgangsseite koppelbar. Die Betätigungseinrichtung ist ausgebildet, eine Betätigungskraft bereitzustellen. Der Druckring ist axial angrenzend an das Reibpaket und an den Lamellenträger angeordnet und ausgebildet, eine Gegenkraft bereitzustellen, um mittels der Betätigungskraft und der Gegenkraft die Reibpartner aneinander zu drücken und einen Reibschluss im Reibpaket zu erzielen. Das Mitnehmerteil ist drehmomentschlüssig mit dem Druckring verbunden.

Diese Ausgestaltung hat den Vorteil, dass die Kupplungseinrichtung besonders leise und kostengünstig ausgebildet werden kann.

Erfindungsgemäss umfasst der Lamellenträger eine Innenverzahnung. Der Druckring weist eine Außenverzahnung auf. Die Innenverzahnung und die Außenverzahnung greifen ineinander ein und verbinden den Druckring drehmomentschlüssig mit dem Lamellenträger. Auf diese Weise erfolgt eine Drehmomentübertragung zwischen dem Lamellenträger und dem Mitnehmerteil über den Druckring.

In einer weiteren Ausführungsform weist der Lamellenträger eine Innenverzahnung auf. Das Mitnehmerteil weist eine Außenverzahnung auf. Die Innenverzahnung und die Außenverzahnung greifen ineinander ein und koppeln das Mitnehmerteil drehmomentschlüssig mit dem Lamellenträger. Dadurch kann ein besonders hohes Drehmoment zwischen dem Mitnehmerteil und dem Lamellenträger übertragen werden.

Der Druckring weist wenigstens ein sich in axialer Richtung erstreckendes zweites Eingriffselement auf. Das Mitnehmerteil weist wenigstens eine korrespondierend zu dem zweiten Eingriffselement ausgebildete erste Aussparung auf. Das zweite Eingriffselement greift zur drehmomentschlüssigen Verbindung des Druckrings mit dem Mitnehmerteil in die erste Aussparung ein.

In einer weiteren Ausführungsform weist die Mitnehmereinheit eine Passscheibe auf. Axial ist die Passscheibe zwischen dem Druckring und dem Mitnehmerteil angeordnet. Die Passscheibe weist wenigstens eine korrespondierend zum zweiten Eingriffselement ausgebildete zweite Aussparung auf. Das zweite Eingriffselement durchgreift die zweite Aussparung. Dadurch wird eine Position der Passscheibe gesichert.

In einer weiteren Ausführungsform ist das erste Eingriffselement und das zweite Eingriffselement in Umfangsrichtung auf gleicher Höhe angeordnet.

In einer weiteren Ausführungsform weist die Außenverzahnung wenigstens einen sich in radialer Richtung nach außen erstreckenden Zahn auf. Der Zahn und das erste Eingriffselement sind in einer gemeinsamen Drehebene zur Drehachse angeordnet. Der Zahn und das erste Eingriffselement sind in Umfangsrichtung zueinander beabstandet angeordnet. Auf diese Weise kann der Druckring besonders kostengünstig aus einem plattenförmigen Material mittels eines Stanzbiegeverfahrens hergestellt werden.

In einer weiteren Ausführungsform sind wenigstens zwei erste Eingriffselemente vorgesehen, wobei in Umfangsrichtung zwischen den beiden ersten Eingriffselementen der Zahn, vorzugsweise zwei Zähne angeordnet sind. Auf diese Weise wird sowohl eine spielfreie Anbindung mittels des ersten Eingriffselements am Lamellenträger als auch mittels der Zähne eine Drehmomentübertragung zwischen dem Druckring und dem Lamellenträger sichergestellt.

In einer weiteren Ausführungsform ist die Kupplungseinrichtung als Doppelkupplung, insbesondere als nasslaufende Doppelkupplung, ausgebildet.

Nachfolgend wird die Erfindung anhand von Figuren näher erläutert. Dabei zeigen:
Figur 1 einen Halblängsschnitt durch eine Kupplungseinrichtung;
Figur 2 eine perspektivische Ansicht einer Mitnehmereinheit, der in Figur 1 gezeigten Kupplungseinrichtung; die Mitnehmereinheit aus Fig. 2 ist eine erfindungsgemäße Mitnehmereinheit;
Figur 3 eine Explosionsansicht der in Figur 2 gezeigten Mitnehmereinheit;
Figur 4 eine Explosionsansicht einer Variante der in den Figuren 1 bis 3 gezeigten Mitnehmereinheit. Die Variante aus Fig. 4 ist hilfreich zum Verständnis der vorliegenden Erfindung.

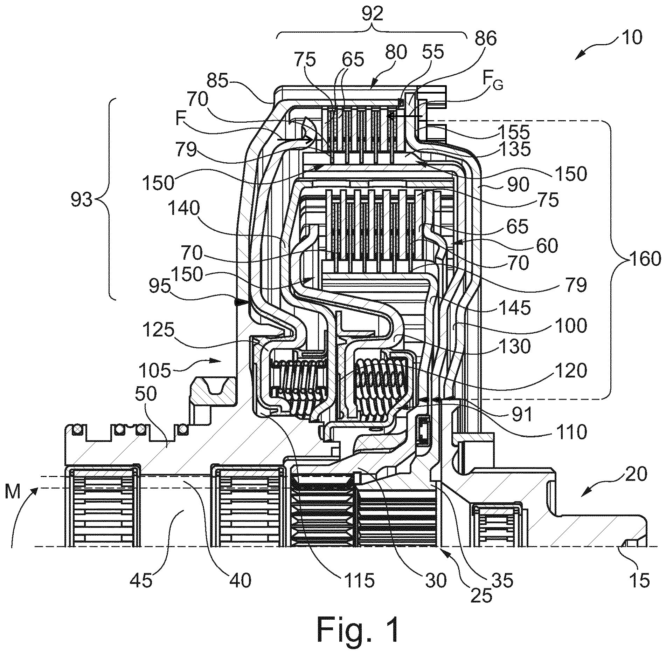

Figur 1 zeigt einen Halblängsschnitt durch eine Kupplungseinrichtung 10.

Die Kupplungseinrichtung 10 ist drehbar um eine Drehachse 15 gelagert. Die Kupplungseinrichtung 10 weist eine Eingangsseite 20 und eine Ausgangsseite 25 auf. Die Eingangsseite 20 ist ausgebildet, mit einer Ausgangsseite eines Hubkolbenmotors drehmomentschlüssig verbunden zu werden. Die Ausgangsseite 25 der Kupplungseinrichtung 10 umfasst eine erste Nabe 30 und eine zweite Nabe 35. Die erste Nabe 30 stellt eine drehmomentschlüssige Verbindung zu einer ersten Getriebeeingangswelle 40 (strichliert dargestellt) einer Getriebeeinrichtung zur Verfügung. Die zweite Nabe 35 stellt eine drehmomentschlüssige Verbindung zu einer zweiten Getriebeeingangswelle 45 (strichliert dargestellt) der Getriebeeinrichtung zur Verfügung. Ferner umfasst die Kupplungseinrichtung 10 einen Rotor 50, der ausgebildet ist, mit einem Steuergerät der Kupplungseinrichtung 10 verbunden zu werden. Die Kupplungseinrichtung 10 umfasst ein erstes Reibpaket 55 und ein zweites Reibpaket 60. In der Ausführungsform ist beispielhaft das erste Reibpaket 55 radial außenseitig zum zweiten Reibpaket 60 angeordnet. Die beiden Reibpakete 55, 60 weisen jeweils erste und zweite Reibpartner 65, 70 auf. Dabei sind die ersten Reibpartner 65 als belagslose Reiblamellen ausgebildet, während hingegen die zweiten Reibpartner 70 als Belagslamellen ausgebildet sind. Selbstverständlich sind auch andere Ausgestaltungen denkbar. Dabei weist der erste Reibpartner 65 eine erste Außenverzahnung 75 und der zweite Reibpartner 70 eine erste Innenverzahnung 79 auf.

Die Kupplungseinrichtung 10 weist eine Mitnehmereinheit 80 auf. Die Mitnehmereinheit 80 umfasst einen ersten Lamellenträger 85, einen Druckring 86 und ein Mitnehmerteil 90. Der Druckring 86 ist axial angrenzend an den ersten Lamellenträger 85 angeordnet. Das Mitnehmerteil 90 ist axial angrenzend an den Druckring 86 auf einer zum ersten Reibpaket 55 abgewanderten Seite angeordnet. Das Mitnehmerteil 90 ist scheibenartig ausgebildet und ist radial innenseitig mit der Eingangsseite 20 der Kupplungseinrichtung 10 drehmomentschlüssig verbunden, beispielsweise mit einer ersten Verbindung 91, insbesondere einer Schweißverbindung. Radial außenseitig ist der Druckring 86 mit dem ersten Lamellenträger 85 drehmomentschlüssig verbunden.

Der erste Lamellenträger 85 ist topfartig ausgebildet und weist einen axial verlaufenden Abschnitt 92 und einen radial verlaufenden Abschnitt 93 auf. Der radial verlaufende Abschnitt 93 ist radial innenseitig über eine zweite Verbindung 95, die in der Ausführungsform als Schweißverbindung ausgebildet ist, mit dem Rotor 50 drehmomentschlüssig verbunden. Im Wesentlichen begrenzt die Mitnehmereinheit 80 einen Innenraum 100, in dem die beiden Reibpakete 55, 60 angeordnet sind.

Im Innenraum 100 der Kupplungseinrichtung 10 sind ferner eine erste Betätigungseinrichtung 105 und eine zweite Betätigungseinrichtung 110 vorgesehen. Die erste Betätigungseinrichtung 105 weist einen ersten Druckraum 115 und die zweite Betätigungseinrichtung 110 einen zweiten Druckraum 120 auf. Die beiden Druckräume 115, 120 sind über nicht dargestellte Leitungen, die im Rotor 50 angeordnet sind, hydraulisch mit dem Steuergerät verbunden.

Die erste Betätigungseinrichtung 105 weist ein erstes Betätigungselement 125 auf. Das erste Betätigungselement 125 erstreckt sich radial innenseitig vom ersten Druckraum 115 radial nach außen hin bis zum ersten Reibpaket 55. Die zweite Betätigungseinrichtung 110 umfasst ein zweites Betätigungselement 130, das sich radial vom radial innenseitig angeordneten zweiten Druckraum 120 bis im Wesentlichen radial auf Höhe des zweiten Reibpakets 60 erstreckt.

Die Kupplungseinrichtung 10 umfasst ferner einen zweiten Lamellenträger 135, einen dritten Lamellenträger 140 und einen vierten Lamellenträger 145. Der zweite, dritte und vierte Lamellenträger 135, 140, 145 sind topfartig ausgebildet und weisen jeweils einen radial verlaufenden Abschnitt und jeweils einen axial verlaufenden Abschnitt auf. Radial innenseitig am radial verlaufenden Abschnitt ist der zweite Lamellenträger 135 drehmomentschlüssig mit der zweiten Nabe 35 verbunden. Der zweite Lamellenträger 135 ist dabei als Innenlamellenträger ausgebildet und weist eine zweite Außenverzahnung 150 auf. Der erste Lamellenträger 85 und der zweite Lamellenträger 135 bilden einen ersten Ringspalt aus, in dem das erste Reibpaket 55 angeordnet ist.

Der erste Lamellenträger 85 weist eine zweite Innenverzahnung 155 auf. Die zweite Innenverzahnung 155 und die erste Außenverzahnung 75 der ersten Reibpartner 65 sind korrespondierend zueinander ausgebildet, wobei die erste Außenverzahnung 75 in die zweite Innenverzahnung 155 des ersten Lamellenträgers 85 eingreift, sodass die ersten Reibpartner 65 des ersten Reibpakets 55 drehmomentschlüssig mit dem ersten Lamellenträger 85 verbunden sind.

In die zweite Außenverzahnung 150 greift die erste Innenverzahnung 79 der zweiten Reibpartner 70 des ersten Reibpakets 55 ein, sodass die zweiten Reibpartner 70 drehmomentschlüssig mit dem zweiten Lamellenträger 135 verbunden sind.

Wird über den Rotor 50 ein Druckfluid in den ersten Druckraum 115 eingeleitet, so wird das erste Betätigungselement 125 in axialer Richtung in Richtung des ersten Reibpakets 55 verschoben. Dabei wird eine über den ersten Druckraum 115 bereitgestellte Betätigungskraft F über das erste Betätigungselement 125 in das erste Reibpaket 55 eingeleitet.

Das Mitnehmerteil 90 ist axial auf einer gegenüberliegenden Seite des ersten Reibpakets 55 angeordnet. Der Druckring 86 dient dazu, eine zur Betätigungskraft F korrespondierende Gegenkraft F_{G} bereitzustellen. Dadurch werden mittels des ersten Betätigungselements 125 die Reibpartner 65, 70 des ersten Reibpakets 55 axial aneinander gepresst, sodass die Reibpartner 65, 70 einen Reibschluss aufbauen und den ersten Lamellenträger 85 drehmomentschlüssig mit dem zweiten Lamellenträger 135 verbinden. Auf diese Weise kann ein Drehmoment M von der Eingangsseite 20 über das Mitnehmerteil 90, den ersten Lamellenträger 85 und das erste Reibpaket 55 in den zweiten Lamellenträger 135 und über diesen in die zweite Nabe 35 eingeleitet werden.

Der dritte Lamellenträger 140 und der vierte Lamellenträger 145 bilden einen zweiten Ringspalt aus, in dem das zweite Reibpaket 60 angeordnet ist. Analog zur Ausgestaltung des ersten Lamellenträgers 85 ist der dritte Lamellenträger 140 ausgebildet und stellt eine drehmomentschlüssige Verbindung mit den ersten Reibpartnern 65 des zweiten Reibpakets 60 bereit. Des Weiteren ist der dritte Lamellenträger 140 drehmomentschlüssig radial innenseitig mit dem Rotor 50 verbunden. Die zweiten Reibpartner 70 des zweiten Reibpakets 60 sind drehmomentschlüssig mit dem vierten Lamellenträger 145 analog zur Verbindung der zweiten Reibpartner 70 mit dem zweiten Lamellenträger 135 verbunden. Der vierte Lamellenträger 145 ist radial innenseitig drehmomentschlüssig mit der ersten Nabe 30 verbunden.

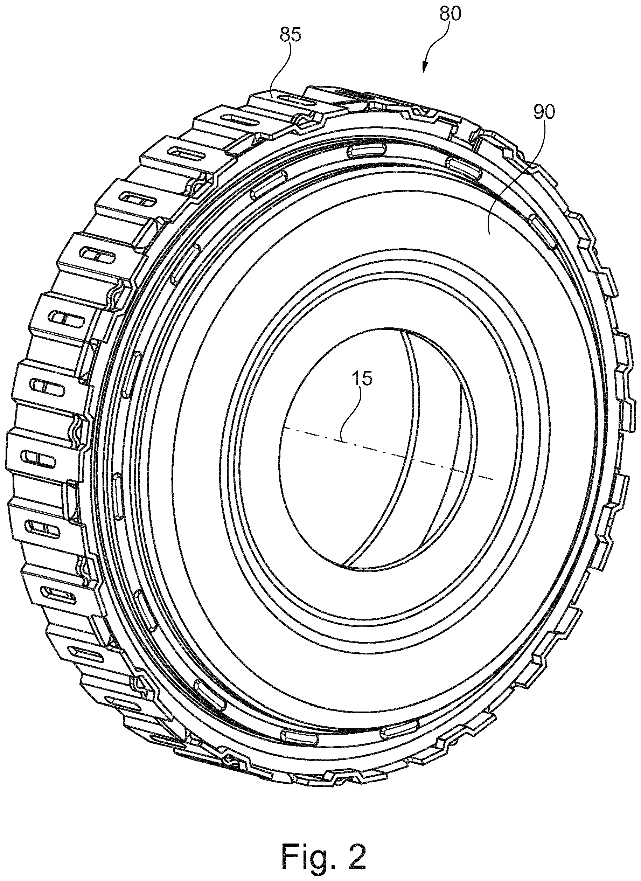

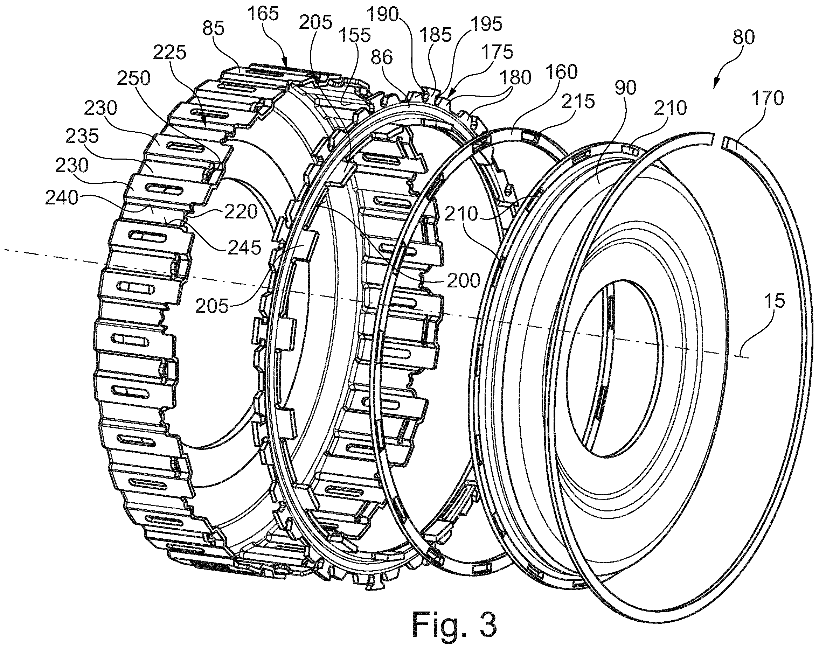

Wird das Druckfluid über den Rotor 50 in den zweiten Druckraum 120 eingeleitet, so wird das zweite Betätigungselement 130 axial verschoben und verpresst das zweite Reibpaket 60, sodass ein Drehmomentschluss zwischen dem dritten Lamellenträger 140 und vierten Lamellenträger 145 bereitgestellt wird. In diesem Fall wird das Drehmoment M von der Eingangsseite 20 über das Mitnehmerteil 90 an den ersten Lamellenträger 85 und von diesem an den Rotor 50 übertragen. Von dem Rotor 50 wird das Drehmoment M weiter über den dritten Lamellenträger 140 und das zweite Reibpaket 60 in den vierten Lamellenträger 145 und von dort in die erste Nabe 30 weitergeleitet. Figur 2 zeigt eine perspektivische Ansicht der Mitnehmereinheit 80 der in Figur 1 gezeigten Kupplungseinrichtung 10 und Figur 3 zeigt eine Explosionsansicht der in Figur 2 gezeigten Mitnehmereinheit 80. Figur 3 zeigt eine Explosionsansicht der in Figur 2 gezeigten Mitnehmereinheit 80.

Die Mitnehmereinheit 80 weist neben dem ersten Lamellenträger 85, dem Druckring 86 und dem Mitnehmerteil 90 in der Ausführungsform beispielhaft noch eine Passscheibe 160 und eine Sicherungseinrichtung 165 auf. Die Sicherungseinrichtung 165 umfasst ein Sicherungselement 170, das als Sicherungsring ausbildet ist.

Der Druckring 86 weist radial außenseitig eine dritte Außenverzahnung 175 auf. Die dritte Außenverzahnung 175 weist einzelne Zähne 180 auf. Die Zähne 180 sind dabei in Umfangsrichtung beabstandet zueinander angeordnet. Die Zähne 180 sind dabei korrespondierend zu der zweiten Innenverzahnung 155 des ersten Lamellenträgers 85 ausgebildet. Die Zähne 180 erstrecken sich in radialer Richtung nach außen hin. Ferner umfasst der Druckring 86 radial außenseitig in Umfangsrichtung zwischen den Zähnen 180 angeordnet wenigstes ein erstes Eingriffselement 185. Zwischen den ersten Eingriffselementen 185 sind in der Ausführungsform mehrere Zähne, beispielsweise zwei Zähne 180 angeordnet. Die Zähne 180 greifen in die zweite Innenverzahnung 155 ein. Die Zähne 180 und die Innenverzahnung 155 verbinden dabei drehmomentschlüssig den Druckring 86 mit dem ersten Lamellenträger 85.

Das erste Eingriffselement 185 erstreckt sich radial nach außen hin und ist in der gleichen Drehebene wie die Zähne 180 der dritten Außenverzahnung 175 angeordnet. Das erste Eingriffselement 185 ist schwalbenschwanzähnlich ausgebildet. Das erste Eingriffselement 185 weist eine erste Eingriffsflanke 190 und eine zweite Eingriffsflanke 195 auf. Die erste Eingriffsflanke 190 und die zweite Eingriffsflanke 195 sind in Umfangsrichtung gegenüberliegend zueinander angeordnet. Dabei sind beispielhaft die Eingriffsflanken 190, 195 jeweils in einer Ebene angeordnet, wobei sich die Ebenen, in denen die Eingriffsflanken 190, 195 angeordnet sind, radial innenseitig des ersten Eingriffselements 185 schneiden. Dabei sind die Eingriffsflanken 190, 195 schräg zueinander beispielhaft angeordnet.

Der Druckring 86 weist ferner an einer Stirnseite 200, die auf einer zum Reibpaket 55, 60 abgewandten Seite angeordnet ist, wenigstens ein zweites Eingriffselement 205 auf. In der Ausführungsform sind mehrere in Umfangsrichtung in regelmäßigem Abstand an der Stirnseite 200 zweite Eingriffselemente 205 vorgesehen. Die zweiten Eingriffselemente 205 sind stegförmig ausgebildet und erstrecken in axialer Richtung parallel zur Drehachse 15. Dabei sind in Umfangsrichtung das erste Eingriffselement 185 und das zweite Eingriffselement 205 jeweils etwa auf gleicher Höhe angeordnet. Selbstverständlich ist auch denkbar, dass das erste Eingriffselement 185 und das zweite Eingriffselement 205 in Umfangsrichtung versetzt zueinander angeordnet sind.

Das Mitnehmerteil 90 ist in der Ausführungsform scheibenartig ausgebildet. Radial außen weist das Mitnehmerteil 90 mehrere erste Aussparungen 210 auf, die korrespondierend zu dem zweiten Eingriffselement 205 ausgebildet sind. Die Anordnung der ersten Aussparung 210 ist dabei korrespondierend zu der Anordnung der zweiten Eingriffselemente 205 gewählt.

Axial zwischen dem Mitnehmerteil 90 und dem Druckring 86 ist die Passscheibe 160 angeordnet. Die Passscheibe 160 ist in der Ausführungsform ringförmig ausgebildet. Selbstverständlich ist auch denkbar, dass die Passscheibe 160 teilringförmig oder andersartig ausgebildet ist. Auch ist denkbar, dass auf die Passscheibe 160 verzichtet wird. Die Passscheibe 160 wird in der Montage der Mitnehmereinheit 80 in ihrer Dicke entsprechend ausgewählt, dass die Mitnehmereinheit 80 in axialer Richtung im Wesentlichen spielfrei ist. Mittels der Passscheibe 160 wird somit ein Toleranzausgleich zwischen dem Druckring 86, dem ersten Lamellenträger 85 und dem Mitnehmerteil 90 erzielt.

Die Passscheibe 160 weist mehrere in Umfangsrichtung angeordnete zweite Aussparungen 215 auf. Die zweiten Aussparungen 215 sind korrespondierend in Umfangsrichtung beabstandet zu der Anordnung der zweiten Eingriffselemente 205 am Druckring 86 angeordnet. Die Ausgestaltung der zweiten Aussparung 215 ist dabei korrespondierend zu dem zweiten Eingriffselement 205.

In montiertem Zustand (vgl. Figur 2) durchgreift jedes zweite Eingriffselement 205 die erste und zweite Aussparung 215, 210. Auf diese Weise wird zum einen die Position der Passscheibe 160 gesichert. Zum anderen wird das Mitnehmerteil 90 drehmomentschlüssig mit dem Druckring 86 verbunden. Um das Mitnehmerteil 90 axial mit dem Druckring 86 zu verbinden, wird in der Montage der Mitnehmereinheit 80 nach einem Durchstecken der zweiten Eingriffselemente 205 durch die erste und zweite Aussparung 210, 215 das zweite Eingriffselement 205 verstemmt. Dies wird vorteilhafterweise vor einem Einfügen des Druckrings 86 in den ersten Lamellenträger 85 durchgeführt, da dann die zum Verstemmen des zweiten Eingriffselements 205 notwendigen Verstemmkräfte auf einfache Weise an einer Matrize abgestützt werden können. Durch das Verstemmen des zweiten Eingriffselements 205 in den Aussparungen 210, 215 wird ferner eine spielfreie Verbindung zwischen dem Mitnehmerteil 90 und dem Druckring 86 zum spielfreien Drehmomentaustausch zwischen dem Druckring 86 und dem Mitnehmerteil 90 erzielt.

Der erste Lamellenträger 85 weist auf einer dem Mitnehmerteil 90 zugewandten Seite eine Ausnehmung 220 auf. Die Ausnehmung 220 kann beispielsweise nach einem Rollen der zweiten Innenverzahnung 155 in den ersten Lamellenträger 85, beispielsweise durch einen Stanzvorgang, eingebracht werden. Die Ausnehmung 220 ist hin zum Druckring 86 offen.

Durch das Einbringen der zweiten Innenverzahnung 155 mittels eines Rollprozesses in den ersten Lamellenträger 85 wird radial außenseitig an dem ersten Lamellenträger 85 eine vierte Außenverzahnung 225 ausgebildet. Die vierte Außenverzahnung 225 weist radial nach außen hin verlaufende Außenverzahnungszähne 230 auf. Zwischen den Außenverzahnungszähnen 230 ist ein Außenverzahnungsgrund 235 vorgesehen. An den Außenverzahnungsgrund 235 angrenzend weist jede Außenverzahnungszahn 230 eine Außenverzahnungsflanke 240, 245 auf.

Das erste Eingriffselement 185 durchgreift radial nach außen hin die Ausnehmung 220. In der Ausführungsform ist die erste Eingriffsflanke 190 korrespondierend zu einer ersten Außenverzahnungsflanke 240 der dritten Außenverzahnung 230 ausgerichtet. Die zweite Eingriffsflanke 195 ist korrespondierend zu einer zweiten Außenverzahnungsflanke 245 der dritten Außenverzahnung 230 angeordnet. Dabei liegt die erste Eingriffsflanke 190 radial außenseitig an der ersten Außenverzahnungsflanke 240 und die zweite Eingriffsflanke 195 radial außenseitig an der zweiten Außenverzahnungsflanke 245 an. In der Ausführungsform sind in Umfangsrichtung die erste Eingriffsflanke 190 und die zweite Eingriffsflanke 195 derart in Umfangsrichtung beabstandet zueinander angeordnet, dass diese ein Übermaß in Umfangsrichtung zu einem Abstand zwischen der ersten Außenverzahnungsflanke 240 und der zweiten Außenverzahnungsflanke 245 aufweisen. Auf diese Weise kann spielfrei der Druckring 86 mit dem ersten Lamellenträger 85 verbunden werden.

Die Sicherungseinrichtung 165 weist axial angrenzend an das erste Reibpaket 55 eine an einer inneren Umfangsfläche des ersten Lamellenträgers 85 angeordnete Nut 250 auf. In die Nut 250 greift der Sicherungselement 170 ein.

Wird, wie oben beschrieben, durch die erste Betätigungseinrichtung 105 die Betätigungskraft F bereitgestellt, so stellt durch eine rückwärtige Abstützung des Druckrings 86 über die Passscheibe 160 und das Mitnehmerteil 90 an dem Sicherungselement 170 der Druckring 86 die Gegenkraft F_{G} zum Verpressen der Reibpartner 65, 70 des ersten Reibpakets 55 bereit.

Wird das Drehmoment M über die Eingangsseite 20 in die Kupplungseinrichtung 10 eingeleitet, so wird das Drehmoment M über das Mitnehmerteil 90 radial nach außen zu den ersten Aussparungen 210 geleitet. Über die erste Aussparung 210 und das zweite Eingriffselement 205 wird das Drehmoment an den Druckring 86 übergeben. Der Druckring 86 übergibt das Drehmoment mittels der Zähne 180 an die zweite Innenverzahnung 155. Von dem ersten Lamellenträger 85 wird bei Bereitstellung der Betätigungskraft F das Drehmoment M an den zweiten Lamellenträger 135 übergeben, der das Drehmoment M weiter an die zweite Nabe 35 und von der zweiten Nabe 35 an die zweite Getriebeeingangswelle 45 weiterleitet.

Die Drehmomentübertragung erfolgt dabei im Wesentlichen zwischen den Zähnen 180 und der Innenverzahnung 155. In der Ausführungsform ist eine geringere Anzahl von ersten Eingriffselementen 185 gegenüber einer Anzahl von Zähnen 180 der dritten Außenverzahnung 175 vorgesehen. Auf diese Weise wird sichergestellt, dass die Drehmomentübertragung überwiegend zwischen den Zähnen 180 und der Innenverzahnung 155 erfolgt. Dadurch, dass die ersten Eingriffselemente 185 stegförmig sich radial nach außen erstrecken, sind diese biegeweich und fungieren im Wesentlichen als Federeinrichtung, die ein Verzahnungsklappern der Zähne 180 in der zweiten Innenverzahnung 155 vermeidet. Dadurch kann die Mitnehmereinheit 80 und somit auch die Kupplungseinrichtung 10 besonders geräuscharm ausgebildet werden. Zusätzlich sorgt die schwalbenschwanzartige Ausgestaltung des ersten Eingriffselements 185 für eine geringere Belastung des ersten Lamellenträgers 85 und verringert eine radiale Aufweitung des ersten Lamellenträgers 85 bedingt durch eine auf den ersten Lamellenträger 85 unter Drehzahleinfluss wirkende Fliehkraft.

Alternativ zu dem beschriebenen Verstemmen des zweiten Eingriffselements 205 in der ersten Aussparung 210 und gegebenenfalls auch der zweiten Aussparung 215 ist auch denkbar, dass das zweite Eingriffselement 205 radial nach innen oder außen umgebogen wird, um so eine axiale Position des Druckrings 86 in Verbindung mit der Passscheibe 160 gegenüber dem Mitnehmerteil 90 sicherzustellen.

Nachdem der Druckring 86 mit der Passscheibe 160 und dem Mitnehmerteil 90 durch Verstemmen und/oder Umbiegen des zweiten Eingriffselements 205 verbunden ist, wird der Druckring 86 mit der Passscheibe 160 und dem Mitnehmerteil 90 in den ersten Lamellenträger 85 eingesteckt, sodass das erste Eingriffselement 185 in die Ausnehmung 220 eingreift. Im Anschluss daran wird das Sicherungselement 170 eingelegt, so dass das Sicherungselement 170 in die Nut 250 eingreift und so die axiale Position des Druckrings 86, der Passscheibe 160 und des Mitnehmerteils 90 festgelegt ist.

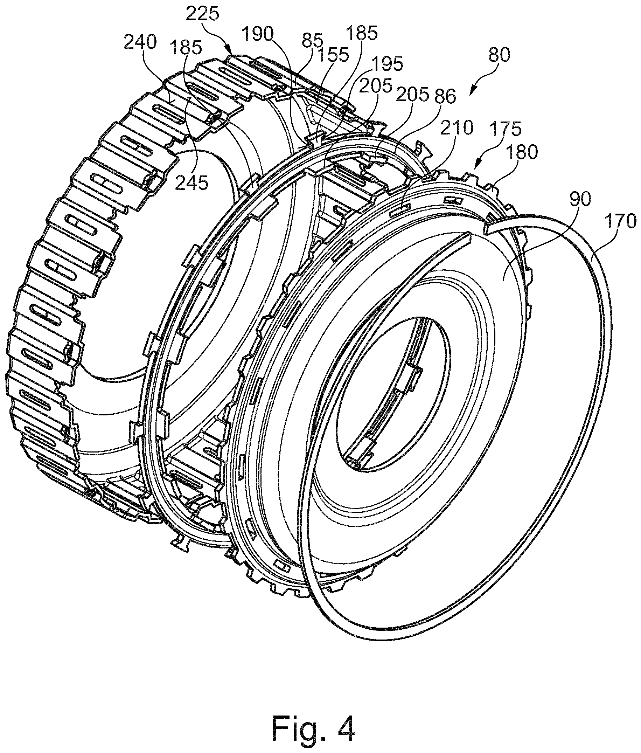

Figur 4 zeigt eine Explosionsansicht einer Variante der in den Figuren 1 bis 3 gezeigten Mitnehmereinheit 80. Die Mitnehmereinheit 80 ist ähnlich zu der in den Figuren 1 bis 3 gezeigten Mitnehmereinheit 80 ausgebildet. Abweichend dazu ist die dritte Außenverzahnung 175 nicht am Druckring 86, sondern radial außenseitig an dem Mitnehmerteil 90 angeordnet. Somit ist zwischen den ersten Eingriffselementen 185 kein weiterer Zahn 180 der dritten Außenverzahnung 175 vorgesehen. Ferner wird beispielhaft auf die in den Figuren 3 gezeigte Passscheibe 160 verzichtet. Selbstverständlich ist auch denkbar, dass auch in Figur 4 die bereits in Figur 3 erläuterte Passscheibe 160 axial zwischen dem Druckring 86 und dem Mitnehmerteil 90 vorgesehen ist.

Das Mitnehmerteil 90 wird über den Eingriff des Eingriffselements 205 in die erste Aussparung 210 drehmomentschlüssig mit dem Druckring 86 verbunden. Ferner greift die dritte Außenverzahnung 175 in montiertem Zustand in die zweite Innenverzahnung 155 des ersten Lamellenträgers 85 ein. Der Drehmomentaustausch zwischen dem ersten Lamellenträger 85 und dem Mitnehmerteil 90 erfolgt überwiegend über die zweite Innenverzahnung 155 und die dritte Außenverzahnung 175. Das erste Eingriffselement 185 hintergreift von radial innen gesehen den ersten Lamellenträger 85. Mittels des ersten Eingriffselements 185 wird eine spielfreie Verbindung zwischen dem Druckring 86 und dem ersten Lamellenträger 85 erzielt. Durch die spielfreie Anbindung zwischen Druckring 86 und dem Mitnehmerteil 90 über das zweite Eingriffselement 205 und die erste Aussparung 210 ist insgesamt die Mitnehmereinheit 80 spielfrei. Wird das Drehmoment M über die Eingangsseite 20 in das Mitnehmerteil 90 eingeleitet, so wird das Drehmoment M über die Zähne 180 der dritten Außenverzahnung 175 an den ersten Lamellenträger 85 überwiegend übergeben. Gegebenenfalls wird ein kleiner Teil des Drehmoments M über die erste Aussparung 210 und das zweite Eingriffselement 205 an den Druckring 86 und vom Druckring 86 über das erste Eingriffselement 185 an die vierte Außenverzahnung 225 übergeben.

Die in Figur 4 beschriebene Ausgestaltung der Mitnehmereinheit 80 hat gegenüber der in den Figuren 1 bis 3 gezeigten Ausgestaltung der Mitnehmereinheit 80 den Vorteil, dass ein höheres Drehmoment M zwischen dem ersten Lamellenträger 85 und dem Mitnehmerteil 90 ausgetauscht werden kann. Dies liegt insbesondere darin, dass eine größere Anzahl von Zähnen 180 der dritten Außenverzahnung 175 zum Drehmomentaustausch zwischen der zweiten Innenverzahnung 155 und der dritten Außenverzahnung 175 bereitsteht.

Es wird darauf hingewiesen, dass die in den Figuren 1 bis 4 gezeigten Merkmale der Kupplungseinrichtung 10 auch kombiniert werden können.

Ferner wird auch darauf hingewiesen, dass die Mitnehmereinheit 80, insbesondere der Druckring 86 und das Mitnehmerteil 90, auch zur Anbindung am zweiten, dritten und/oder vierten Lamellenträger 135, 140, 145 zur Ein- oder Ausleitung des Drehmoments in den zweiten, dritten und/oder vierten Lamellenträger 135, 140, 145 geeignet ist.

Die in den Figuren 1 beschriebene Kupplungseinrichtung 10 ist in der Ausführungsform als Doppelkupplung ausgebildet. Dabei ist hierbei die Doppelkupplung als nasslaufende Doppelkupplung ausgebildet, so dass eine Kühlflüssigkeit vorgesehen ist, um die Reibpakete 55, 60 zu kühlen. Selbstverständlich ist auch denkbar, dass die Kupplungseinrichtung 10 als einfache Kupplung - also mit nur einem Reibpaket 55, 60 - ausgebildet ist. Auch sind andere Ausgestaltungen der Kupplungseinrichtung 10 denkbar.

### Bezugszeichenliste

- 10: Kupplungseinrichtung
- 15: Drehachse
- 20: Eingangsseite
- 25: Ausgangsseite
- 30: erste Nabe
- 35: zweite Nabe
- 40: erste Getriebeeingangswelle
- 45: zweite Getriebeeingangswelle
- 50: Rotor
- 55: erste Reibpaket
- 60: zweite Reibpaket
- 65: erster Reibpartner
- 70: zweiter Reibpartner
- 75: erste Außenverzahnung
- 79: erste Innenverzahnung
- 80: Mitnehmereinheit
- 85: erster Lamellenträger (Außenlamellenträger)
- 86: Druckring
- 90: Mitnehmerteil
- 91: erste Verbindung
- 92: axialer Abschnitt
- 93: radialer Abschnitt
- 95: zweite Verbindung
- 100: Innenraum
- 105: erste Betätigungseinrichtung
- 110: zweite Betätigungseinrichtung
- 115: erster Druckraum
- 120: zweiter Druckraum
- 125: erstes Betätigungselement
- 130: zweites Betätigungselement
- 135: zweiter Lamellenträger (Innenlamellenträger)
- 140: dritter Lamellenträger (Außenlamellenträger)
- 145: vierter Lamellenträger (Innenlamellenträger)
- 150: zweite Außenverzahnung
- 155: zweite Innenverzahnung
- 160: Passscheibe
- 165: Sicherungseinrichtung
- 170: Sicherungselement
- 175: dritte Außenverzahnung (des Druckrings)
- 180: Zahn der dritten Außenverzahnung
- 185: erstes Eingriffselement
- 190: erste Eingriffsflanke
- 195: zweite Eingriffsflanke
- 200: Stirnseite
- 205: zweites Eingriffselement
- 210: erste Aussparung
- 215: zweite Aussparung
- 220: Ausnehmung
- 225: vierte Außenverzahnung
- 230: Außenverzahnungszahn
- 235: Außenverzahnungsgrund
- 240: erste Außenverzahnungsflanke
- 245: zweite Außenverzahnungsflanke
- 250: Nut

## Patentansprüche

1. Kupplungseinrichtung (10), die drehbar um eine Drehachse (15) lagerbar ist,
- aufweisend eine Mitnehmereinheit (80), eine Betätigungseinrichtung (105, 110), eine Eingangsseite (20), eine Ausgangsseite (25) und ein Reibpaket (55, 60),
- wobei das Reibpaket (55, 60) einen ersten Reibpartner (65) und einen zweiten Reibpartner (70) aufweist,
- wobei die Mitnehmereinheit (80) einen Lamellenträger (85), ein Mitnehmerteil (90) und einen Druckring (86) umfasst,
- wobei der Lamellenträger (85) mit dem ersten Reibpartner (65) drehmomentschlüssig gekoppelt ist,
- wobei der zweite Reibpartner (70) drehmomentschlüssig mit der Ausgangsseite (25) koppelbar ist,
- wobei die Betätigungseinrichtung (105, 110) ausgebildet ist, eine Betätigungskraft (F) bereitzustellen,
- wobei der Druckring (86) abschnittsweise axial angrenzend an das Reibpaket (55, 60) und an den Lamellenträger (85) angeordnet und ausgebildet ist, eine zur Betätigungskraft F korrespondierende Gegenkraft (F G ) bereitzustellen, um mittels der Betätigungskraft (F) und der Reibpartner (65, 70) aneinander zu drücken und einen Reibschluss im Reibpaket (55, 60) zu erzielen,
- wobei das Mitnehmerteil (90) drehmomentschlüssig mit dem Druckring (86) verbunden ist, **dadurch gekennzeichnet, dass** der Lamellenträger (85) eine Innenverzahnung aufweist und der Druckring (86) eine Außenverzahnung aufweist, wobei die Innenverzahnung und die Außenverzahnung ineinander eingreifen und den Druckring (86) drehmomentschlüssig mit dem Lamellenträger (85) verbinden, womit eine Drehmomentübertragung zwischen dem Lamellenträger (85) und dem Mitnehmerteil (90) über den Druckring (86) erfolgt,
- wobei der Lamellenträger (85) eine weitere Außenverzahnung und der Druckring (86) wenigstens ein radial nach außen erstreckendes erstes Eingriffselement (185) umfasst,
- wobei das erste Eingriffselement (185) eine erste Eingriffsflanke (190) aufweist und die weitere Außenverzahnung wenigstens eine Außenverzahnungsflanke (240) aufweist,
- wobei das erste Eingriffselement (185) eine Ausnehmung (220) des Lamellenträgers (85) in radialer Richtung durchgreift,
- wobei die erste Eingriffsflanke (190) radial außenseitig der Außenverzahnungsflanke (240) und korrespondierend zur Außenverzahnungsflanke (240) angeordnet ist und einen Berührkontakt mit der Außenverzahnungsflanke (240) aufweist,
- wobei der Druckring (86) wenigstens ein in axialer Richtung erstreckendes zweites Eingriffselement (205) aufweist,
- wobei das Mitnehmerteil (90) wenigstens eine korrespondierend zu dem zweiten Eingriffselement (205) ausgebildete erste Aussparung (210) aufweist,
- wobei das zweite Eingriffselement (205) in die erste Aussparung (210) zur drehmomentschlüssigen Verbindung des Druckrings (86) mit dem Mitnehmerteil (90) eingreift.

2. Kupplungseinrichtung (10) nach Anspruch 1,
- wobei das erste Eingriffselement (185) eine zweite Eingriffsflanke (195) aufweist,
- wobei die zweite Eingriffsflanke (195) auf einer in Umfangsrichtung gegenüberliegenden Seite zu der ersten Eingriffsflanke (190) am ersten Eingriffselement (185) angeordnet ist,
- wobei die beiden Eingriffsflanken (190, 195) aufeinander zulaufend ausgebildet sind.

3. Kupplungseinrichtung (10) nach Anspruch 1,
- wobei die Mitnehmereinheit (80) eine Passscheibe (160) umfasst,
- wobei axial zwischen dem Druckring (86) und dem Mitnehmerteil (90) die Passscheibe (160) angeordnet ist,
- wobei die Passscheibe (160) wenigstens eine korrespondierend zum zweiten Eingriffselement (205) ausgebildete zweite Aussparung (215) aufweist,
- wobei das zweite Eingriffselement (205) die zweite Aussparung (215) durchgreift.

4. Kupplungseinrichtung (10) nach Anspruch 3,
- wobei das erste Eingriffselement (185) und das zweite Eingriffselement (205) in Umfangsrichtung auf gleicher Höhe angeordnet sind.

5. Kupplungseinrichtung (10) nach einem der Ansprüche 2 bis 4,
- wobei die Außenverzahnung (175) wenigstens einen sich in radialer Richtung nach außen erstreckenden Zahn (180) aufweist,
- wobei der Zahn (180) und das erste Eingriffselement (185) in einer gemeinsamen Drehebene zur Drehachse (15) angeordnet sind,
- wobei der Zahn (180) und das erste Eingriffselement (185) in Umfangsrichtung beabstandet zueinander angeordnet sind.

6. Kupplungseinrichtung (10) nach Anspruch 5,
- wobei wenigstens zwei erste Eingriffselemente (185) vorgesehen sind,
- wobei in Umfangsrichtung zwischen den beiden ersten Eingriffselementen (185) der Zahn (180), vorzugsweise zwei Zähne (180), angeordnet sind.

7. Kupplungseinrichtung (10) nach einem der Ansprüche 1 bis 6, wobei die Kupplungseinrichtung (10) als Doppelkupplung, insbesondere als nasslaufende Doppelkupplung, ausgebildet ist.

## Claims

1. Coupling device (10), which can be rotatably mounted about an axis of rotation (15),
- comprising a driver unit (80), an actuating device (105, 110), an input side (20), an output side (25) and a friction pack (55, 60),
- wherein the friction pack (55, 60) comprises a first friction partner (65) and a second friction partner (70),
- wherein the driver unit (80) comprises a disk carrier (85), a driver part (90) and a pressure ring (86),
- wherein the disk carrier (85) is coupled to the first friction partner (65) in a torque-locking manner,
- wherein the second friction partner (70) may be coupled to the output side (25) in a torque-locking manner,
- wherein the actuating device (105, 110) is designed to provide an actuating force (F),
- wherein the pressure ring (86) is arranged in sections axially adjacent to the friction packet (55, 60) and to the disk carrier (85) and is designed to provide a counterforce (F G) corresponding to the actuating force (F) in order to press against each other by means of the actuating force (F) and the friction partners (65, 70) and to achieve a frictional engagement in the friction packet (55, 60),
- wherein the driver part (90) is connected to the pressure ring (86) in a torque-locking manner, **characterised in that** the disc carrier (85) comprises an internal toothing and the pressure ring (86) comprises an external toothing, wherein the internal toothing and the external toothing engage with one another and connect the pressure ring (86) to the disc carrier (85) in a torque-locking manner, whereby torque is transmitted between the disc carrier (85) and the driver part (90) via the pressure ring (86),
- wherein the disk carrier (85) comprises a further external toothing, and the pressure ring (86) comprises at least one radially outwardly extending first engagement element (185),
- wherein the first engagement element (185) comprises a first engagement flank (190) and the further external toothing comprises at least one external toothing flank (240),
- wherein the first engagement element (185) engages through a recess (220) of the disk carrier (85) in the radial direction,
- wherein the first engagement flank (190) is arranged radially outside the external toothing flank (240) and corresponding to the external toothing flank (240) and comprises a touch contact with the external toothing flank (240),
- wherein the pressure ring (86) comprises at least one second engagement element (205) extending in the axial direction,
- wherein the driver part (90) comprises at least one first recess (210) configured corresponding to the second engagement element (205),
- wherein the second engagement element (205) engages the first recess (210) to enable a torque-locking connection of the pressure ring (86) to the driver part (90).

2. Coupling device (10) according to Claim 1,
- wherein the first engagement element (185) comprises a second engagement flank (195),
- wherein the second engagement flank (195) is arranged on a circumferentially opposite side to the first engagement flank (190) on the first engagement element (185),
- wherein the two engagement flanks (190, 195) are configured tapering toward one another.

3. Coupling device (10) according to Claim 1,
- wherein the driver unit (80) comprises a shim (160),
- wherein the shim (160) is arranged axially between the pressure ring (86) and the driver part (90),
- wherein the shim (160) comprises at least one second recess (215) configured corresponding to the second engagement element (205),
- wherein the second engagement element (205) engages through the second recess (215).

4. Coupling device (10) according to Claim 3,
- wherein the first engagement element (185) and the second engagement element (205) are arranged at the same height in the circumferential direction.

5. Coupling device (10) according to any of Claims 2 to 4,
- wherein the external toothing (175) comprises at least one tooth (180) extending outwards in the radial direction,
- wherein the tooth (180) and the first engagement element (185) are arranged in a common plane of rotation with respect to the axis of rotation (15),
- wherein the tooth (180) and the first engagement element (185) are arranged at a distance from each other in the circumferential direction.

6. Coupling device (10) according to Claim 5,
- wherein at least two first engagement elements (185) are provided,
- wherein the tooth (180), preferably two teeth (180), is arranged in the circumferential direction between the two first engagement elements (185).

7. Coupling device (10) according to any one of Claims 1 to 6, wherein the coupling device (10) is configured as a dual coupling, in particular as a wet-running dual coupling.

## Revendications

1. Dispositif d'embrayage (10) qui peut être disposé de façon à pouvoir pivoter autour d'un axe de rotation (15) ;
- comportant un dispositif d'entraînement (80), un dispositif d'actionnement (105, 110), un côté d'entrée (20), un côté de sortie (25) et un paquet de friction (55, 60) ;
- dans lequel le paquet de friction (55, 60) comporte un premier élément associé de friction (65) et un deuxième élément associé de friction (70) ;
- dans lequel le dispositif d'entraînement (80) comprend un support de lamelles (85), une partie d'entraînement (90) et une bague de pression (86) ;
- dans lequel le support de lamelles (85) est couplé au premier élément associé de friction (65) par complémentarité de couples de rotation ;
- dans lequel le deuxième élément associé de friction (70) peut être couplé au côté de sortie (25) par complémentarité de couples de rotation ;
- dans lequel le dispositif d'actionnement (105, 110) est réalisé pour mettre à disposition une force d'actionnement (F) ;
- dans lequel la bague de pression (86) est en partie disposée et réalisée dans le plan axial de façon connexe au paquet de friction (55, 60) et au support de lamelles (85) pour mettre à disposition une contre-force (F G ) correspondant à la force d'actionnement F, pour les mettre en pression l'un contre l'autre à l'aide de la force d'actionnement (F) et de l'élément associé de friction (65, 70) et pour atteindre une complémentarité de frottements dans le paquet de friction (55, 60) ;
- dans lequel la partie d'entraînement (90) est reliée à la bague de pression (86) par complémentarité de couple de rotation ;
**caractérisé en ce que** le support de lamelles (85) comporte un endentement intérieur et la bague de pression (86) comporte un endentement extérieur, dans lequel l'endentement intérieur et l'endentement extérieur s'engrènent l'un dans l'autre et relient la bague de pression (86) au support de lamelles (85) par complémentarité de couple de rotation, amenant la réalisation d'une transmission de couple de rotation entre le support de lamelles (85) et la partie d'entraînement (90) via la bague de pression (86) ;
- dans lequel le support de lamelles (85) comprend un endentement extérieur supplémentaire et la bague de pression (86) comprend au moins un premier élément de préhension (185) s'étendant vers l'extérieur dans le plan radial ;
- dans lequel le premier élément de préhension (185) comporte un premier flanc de préhension (190) et l'endentement extérieur supplémentaire comporte au moins un flanc d'endentement extérieur (240) ;
- dans lequel le premier élément de préhension (185) agrippe un évidement (220) du support de lamelles (85) en le traversant dans la direction radiale ;
- dans lequel le premier flanc de préhension (190) est disposé sur le côté extérieur dans le plan radial du flanc d'endentement extérieur (240) et de façon correspondante par rapport au flanc d'endentement extérieur (240) et comporte un contact par voie tactile avec le flanc d'endentement extérieur (240) ;
- dans lequel la bague de pression (86) comporte au moins un deuxième élément de préhension (205) s'étendant dans la direction axiale ;
- dans lequel la partie d'entraînement (90) comporte au moins un premier évidement (210) réalisé de façon correspondante au deuxième élément de préhension (205) ;
- dans lequel le deuxième élément de préhension (205) s'engrène dans le premier évidement (210) pour réaliser la liaison par complémentarité de couple de rotation de la bague de pression (86) avec la partie d'entraînement (90).

2. Dispositif d'embrayage (10) selon la revendication 1,
- dans lequel le premier élément de préhension (185) comporte un deuxième flanc de préhension (195) :
- dans lequel le deuxième flanc de préhension (195) est disposé sur un côté opposé dans la direction périphérique par rapport au premier flanc de préhension (190) au niveau du premier élément de préhension (185) ;
- dans lequel les deux flancs de préhension (190, 195) sont réalisés de façon à confluer l'un vers l'autre.

3. Dispositif d'embrayage (10) selon la revendication 1,
- dans lequel le dispositif d'entraînement (80) comprend une rondelle d'ajustage (160) ;
- dans lequel la rondelle d'ajustage (160) est disposée dans le plan axial entre la bague de pression (86) et la partie d'entraînement (90) ;
- dans lequel la rondelle d'ajustage (160) comporte au moins un deuxième évidement (215) réalisé de façon correspondante par rapport au deuxième élément de préhension (205) ;
- dans lequel le deuxième élément de préhension (205) agrippe le deuxième évidement (215) en le traversant ;

4. Dispositif d'embrayage (10) selon la revendication 3,
- dans lequel le premier élément de préhension (185) et le deuxième élément de préhension (205) sont disposés à même hauteur dans la direction circonférentielle.

5. Dispositif d'embrayage (10) selon l'une quelconque des revendications 2 à 4,
- dans lequel l'endentement extérieur (175) comporte au moins une dent (180) s'étendant vers l'extérieur dans la direction radiale ;
- dans lequel la dent (180) et le premier élément de préhension (185) sont disposés dans un plan de pivotement commun par rapport à l'axe de rotation (15) ;
- dans lequel la dent (180) et le premier élément de préhension (185) sont disposés à une certaine distance l'un de l'autre dans la direction circonférentielle.

6. Dispositif d'embrayage (10) selon la revendication 5,
- dans lequel au moins deux premiers éléments de préhension (185) sont prévus ;
- dans lequel la dent (180), de préférence deux dents (180), sont disposées dans la direction circonférentielle entre les deux premiers éléments de préhension (185).

7. Dispositif d'embrayage (10) selon l'une quelconque des revendications 1 à 6, dans lequel le dispositif d'embrayage (10) est réalisé sous la forme d'un double embrayage, notamment d'un double embrayage fonctionnant en milieu lubrifié.
